# EUROPÄISCHE PATENTANMELDUNG

(11) **EP 1 203 715 A2**
(43) Veröffentlichungstag der Anmeldung: **08.05.2002**
(21) Anmeldenummer: 01126057.7
(22) Anmeldetag: 01.11.2001
(51) Int. Cl.: B63H 5/16, B63H 5/14, B63H 5/125

(54) **Schiff, insbesondere schnelles Fährschiff mit PoD-Antrieb**

(30) Priorität: 02.11.2000 DE 10054148
(71) Anmelder: Schottel GmbH & Co KG., D-56322 Spay am Rhein (DE)
(72) Erfinder:
(74) Vertreter: Walter, Helmut, Dipl.-Ing.

(57) **Zusammenfassung**

Gegenstand der Erfindung ist ein Schiff, insbesondere schnelles Fährschiff mit PoD-Antrieb, bei dem zumindest eine Propulsionseinheit im Heckbereich des Schiffes auf der einen bzw. anderen Seite eines in der Rumpflängsmitte angeordneten in Längsrichtung des Schiffes verlaufenden Skeg angeordnet ist. In diesem Bereich ist der Schiffsrumpfboden im wesentlichen eben und sowohl in der Seitenansicht zum Heck hin nach oben ansteigend als auch in der Längsrichtung gesehen zu den Schiffseitenwänden hin ansteigend gegen die Wasseroberfläche geneigt. Dieser Schiffsbodenbereich geht in der Seitenansicht an dem Schiffsheck abgewandten Ende in einem stetigen Übergangsbogen in den übrigen, deutlich längeren parallel zur Wasseroberfläche verlaufenden Schiffsbodenbereich über, während der zuerst definierte Schiffsbodenbereich in Übergangsbögen in die Schiffseitenwände übergeht. Die beiden Teilbereiche beiderseits der Schiffslängsachse gehen in Übergangsbogen in den symmetrisch zur Schiffslängsachse in Schiffslängsrichtungverlaufenden Skeg über.

## Beschreibung

Für schnelle Fährschiffe eignen sich zum Antrieb Propulsionsantriebe in der Form von gondelartig unter dem Rumpf des Schiffes angeordneten vorzugsweise elektrischen Einheiten, sogenannter PoDs hinter Zuströmgondeln, die Teil der Schiffsstruktur sind. Auf diese Weise verspricht man sich eine Anhebung der Hull-Efficiency (Wechselwirkung von Rumpf und Antrieb) und damit der Gesamteffizienz der Propulsion. Weiterhin wird eine Verbesserung der Struktursteifigkeit erwartet.

Der Nachteil dieser Anordnung ist der erhöhte Rumpfwiderstand durch den hohen Anteil der benetzten Oberfläche und die kanalförmig eingezwängte Strömung zwischen den wulstförmigen Zuströmgondeln. Weiterhin wird der Propulsor einer höheren Belastung und einem inhomogenen Nachstromfeld ausgesetzt. Letzteres hat Wirkungsgradnachteile und hohe Druckschwankungen zur Folge.

Aus diesen Gründen soll aufgabegemäß mit der Erfindung eine im Boden- und Antriebsbereich neue Schiffsausbildung vorgeschlagen werden, bei der eine freie Anströmung der PoDs sichergestellt ist und die Gierstabilität gewährleistet ist. Zur Anwendung kommen sollen dabei die erwähnten PoDs für die durch Ausbildung des Hinterschiffes unter Anwendung eines Mittelskeges die Zuströmung optimiert werden soll.

Wesentliche Aspekte und Vorteile dieser erfindungsgemäßen Schiffsausbildung werden im folgenden dargelegt; wesentliche erfindungsgemäße Merkmale sind Gegenstand der Ansprüche.

Ein erfindungsgemäß ausgebildetes Schiff ist geeignet, Geschwindigkeiten bis zu 32 Knoten zu erreichen. Durch die erfindungsgemäße Installation eines PoD-Antriebes werden schräge Wellen und Abstützungen der Wellen vermieden, wie sie bei konventionellen Propelleranlagen üblich sind und insbesondere bei hohen Geschwindigkeiten zu Ablösungen und infolgedessen zu Druckschwankungen und Geräuschen führen und zudem wirkungsgradmindernde Wirkung haben. Ein weiterer Vorzug der erfindungsgemäßen Installation des PoD-Antriebes ist die Möglichkeit, die Propeller- bzw. Gondelachse in die vom Rumpf bestimmte Strömungsrichtung zu neigen. Niedrige Druckschwankungen und ein hoher Wirkungsgrad sind die positiven Resultate.

Die erfindungsgemäß ausgewählten Hinterschiffslinien sind so, dass nur das eigentliche Unterwasserteil des PoD, auch Propulsionsmodul genannt, aus der Schiffsaußenhaut herausragt. Das ist insofern von Bedeutung, da nur der Unterwasserteil in einer strömungsgünstigen Form ausgeführt ist bzw. werden muß und damit der Widerstand des Schiffes auf ein Mindestmaß reduziert werden kann, zumal nicht mehr widerstanderzeugende Teile ins Wasser gebracht werden als nötig. Eine zuzsätzliche strömungsgünstige Verkleidung, in Fachkreisen auch Headbox genannt, wird vermieden. Die Hinterschiffsform hat einen Spantneigungswinkel 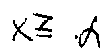 , so dass Oberwasserteil des PoD, auch Azimuthmodul genannt, waagerecht bis maximal zu einem seitlichen Neigungswinkel von 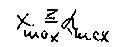 eingebaut werden kann.Das hat wesentliche Vorteile im Hinblick auf Montage, Demontage und Wartung der Anlage (Handling schwerer Teile) sowie die Struktur des Schiffes und die Auslegung von Komponenten des PoDs. Ein weiterer Vorteil ist eine möglichst flache Spantengestaltung, die zu einer Verbreiterung und Homogenisierung des Nachstromes zum PoD führt.

Im Seitenriß wird nicht wie gewöhnlich ein S-Schlag realisiert, der dem Propeller den nötigen Freiraum schaffen soll aber zu einer Widerstandserhöhung beiträgt.

Es wird vermieden, die Strömung mehrfach und z.T. stark umzulenken, was vorteilhaft ist, weil jede Umlenkung mit Widerstandserhöhung verbunden ist.

Der Übergang des Skegs in den Rumpf ist mit einem sehr kleinen Radius ausgeführt, was dem Widerstand und der Nachstromverbreiterung zu gute kommt. Die einseitige Störung des Nachstroms durch die Verzögerung der Strömung entlang des Skegs wird damit reduziert.

Der PoD wird vorzugsweise im Bereich von c₁ (wahrscheinlich > 2,5) mal Dₚ bis c₂ (etwa 2.5)mal Dₚ in Längsrichtung vom Heckspiegel ausgehend positioniert. Der seitliche Mindestabstand der Anlagen beträgt vorzugsweise lₘᵢₙ (etwa2) mal Dₚ. Auf diese Weise wird ein Optimum im Hinblick auf die Wechselwirkungseffekte zwischen Rumpf und Propulsor erzielt. Auf der einen Seite bewirkt der abgehende Propellerstrahl Strahlreibung und Unterdruck. Zur Reduzierung der Strahlreibung sollte die Lauflänge des Strahles am Schiff so kurz wie möglich sein. Auf der anderen Seite beeinflußt der PoD-Körper die Druckverteilung am Hinterschiff und muß somit in eine optimale Position gebracht werden.Berücksichtigt werden muß auch die Wechselwirkung des abgehenden Propellerstrahls mit der Strömung am Spiegelheck (Heckplatte). Weiterhin sollte der Propeller im Strömungszulauf so plaziert sein, dass die Strömungsumlenkung entlang des geformten Hinterschiffes bereits weitgehend abgeschlossen und ein hohes Maß an Gleichförmigkeit des Nachstromfeldes erreicht ist.

Die achterliche Erstreckung des Mittelskegs sollte maximal etwa 10% des Propellerdurchmessers über die Propellerebene hinausgehen. Der Skeg muß in seiner Ausführung den Anforderungen der Festigkeit genügen, sollte aber auch strömungsgünstig geformt sein. Die Seitenfläche des Skegs wird nach dem Maß der erforderlichen Gierstabilität (die Eignung einen Kurs halten zu können) dimensioniert. Mit dem oben genannten Maß wird das für den vorliegenden Fall erreicht und gleichzeitig eine Beeinflussung von Propulsor und Skeg beim Steuern weitestgehend ausgeschlossen. Der Skeg sollte sehr schlank sein und kontinuierlich auf eine Dicke mit dem Maß 0 bzw. dem zu fertigenden Mindestmaß im Auslauf gebracht werden, um eine ablösungsfreie Umströmung zu gewährleisten. Das Skegende sollte im wesentlichen nach oben gerade gestaltet sein, um eine gleichmäßige Anströmung der PoDs zu ermöglichen.

Mit zunehmender Anströmgeschwindigkeit sind für PoDs und Propeller für PoDs folgende Propleme zu beachten.

Die Propellerdurchmesser bleiben bei schnellen Schiffen auch aufgrund des niedrigen Tiefganges klein. Die Druckhöhe über dem Proppeller ist ebenfalls sehr gering. Die Gondel des PoDs muß schlank bleiben. D.h. der Motordurchmesser darf nicht zu groß werden. Das beschränkt das maximal umsetzbare Drehmoment.

Diese Einschränkungen führen u.a. zu großen Propellerdrehzahlen (großen Umfangsgeschwindigkeiten) und hohen Propellersteigungen. Die Kavitationsgefährdung des Propellers nimmt zu und auch der Anströmwinkel zum Gehäuseschaft wird so groß, dass es bereits bei Geradeausfahrt zu Ablösung und Kavitation am Schaft kommen kann. Die Folgen sind Druckschwankungsamplituden, die zu inakzeptablem Geräuscheintrag in die Schiffsaußenhaut führen und auch zu Erosions- und Dreh- und Biegeschwingungsproblemen.

Mehrpropellersysteme wie z.B. der sogenannte SSP in Twinpropeller-Ausführung oder PoDs mit kontrarotierenden Propellern bieten hierbei die folgenden Vorteile: Mit zunehmender Leistung auf kleinem Propellerdurchmesser erleidet der Doppelpropeller nicht in dem Maße einen Wirkungsgradabfall, wie das bei dem Einzelpropeller der Fall ist. Hier kommt die Leistungsverteilung auf zwei Propeller zum Tragen. Weiterhin läßt sich auf diese Weise ein komfortabler Propellerfreischlag, wie man den Abstand zwischen Rumpf und Propellerspitze nennt, realisieren.

Der im Vergleich zum Einzelpropeller niedriger belastete Propeller des Twin-Systems reduziert ebenfalls die oben beschriebenen negativen Effekte beim Auftreffen der Strömung auf den Schaft deutlich.

Grundsätzlich bietet bei der hohen Leistungskonzentration auf dem Propeller solch schneller Anwendungen die Leistungsverteilung auf zwei Propeller, gemäß dem Twin-Propeller-Prinzip, das höchste Wirkungsgradpotential.

Die kompakte Bauart des SSP (kurz bauend) hat zur Folge, dass der PoD optimal positioniert werden kann. Lang bauende PoDs, zusätzlich mit großem Propellerdurchmesser, haben kaum Spielraum, da der erforderliche Mindestfreischlag auf der einen und das Gebot, dass der Propeller nicht unter Schiffsbasis schlagen darf, auf der anderen Seite i.d.R. eine dadurch festgelegte Einbauposition.

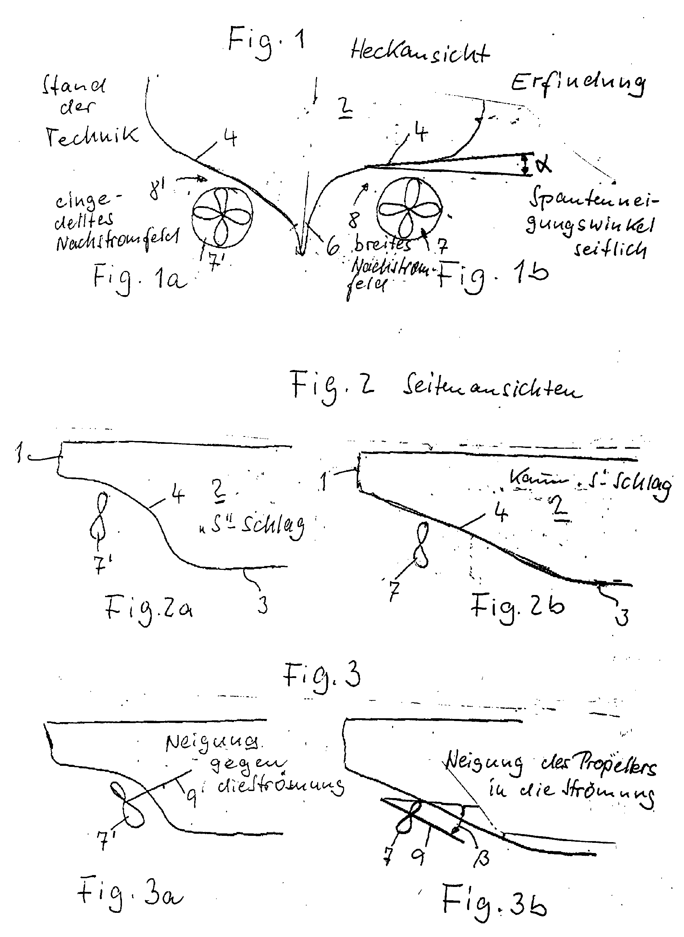

In Fig. 1 mit den Teilfiguren 1a (linke Seite, Heckansicht gemäß dem Stand der Technik) und 1b (rechte Seite, Heckansicht gemäß der Erfindung) in Verbindung mit Fig. 2 mit den Teilfiguren 2a (hinterer Rumpfbereich, Seitenansicht, gemäß dem Stand der Technik) und 2b (hinterer Rumpfbereich, Seitenansicht gemäß der Erfindung) ist zu ersehen, dass zwischen der Heckplatte (Heckspiegel) 1 des Schiffsrumpfes 2 und dem in der Schiffslängsrichtung größeren Teil 3 des flachen Schiffsbodens sich ein übergangsbereich 4 befindet, der sowohl in der Heckansicht (Fig.1) als auch in der Seitenansicht (Fig.2) eben ist, wo er beim Stand der Technik weitestgehend gewölbt ist (Fig.1a) bzw. einen "S"-Schlag bildet (Fig.2a). Dieser Übergangsbereich 4 ist einerseits zum Heck des Schiffes hin schräg nach oben verlaufend gegen die Wasseroberfläche geneigt (Fig.2b) und läuft mit kurzen Übergangsbogen in den Schiffsbodenteil 3 bzw. die Heckplatte 1 ein, läuft andererseits mit ausladenden Übergangsbogen in die Schiffsseitenwände, bzw. den schiffsmittig in Längsrichtung verlaufenden Skeg 6 ein, der schmaler als beim Stand der Technik gehalten ist. Der Spantenneigungswinkel α ist bei der Erfindung flach. Auf diese Weise ist für den Einbau der PoDs 7 ein erheblicher Freiraum geschaffen und zwischen dem jeweiligen PoD und dem Schiffsrumpf kann ein breites homogenes Nachstromfeld 8 eingehalten werden, wo beim Stand derTechnik nur ein eingedelltes Nachströmfeld 8' für die PoDs 7' zur Verfügung steht.

Aus Fig. 3 mit den Teilfiguren 3a (linke Bildhälfte, Heckbereich, Seitenansicht gemäß Stand der Technik) und 3b (rechte Bildhälfte, Heckbereich, Seitenansicht gemäß Erfindung) ist einmal die Neigung der Drehachse 9' der dargestellten Propulsionseinheit 7' gegen die Strömung beim Stand der Technik (Fig.3a) und die Neigung der Drehachse 9 der dargestellten Propulsionseinheit 7 in die Strömung bei der Erfindung (Fig.3b) zu ersehen. Der Neigungswinkel der Drehachse 9 gegen die Wasseroberfläche ist für die Erfindung mit β eingetragen.

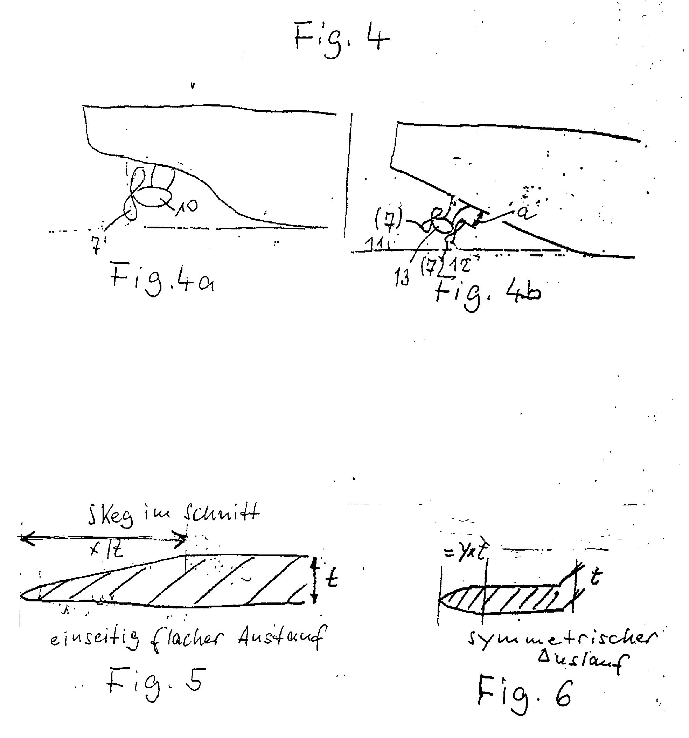

Fig. 4a entspricht im wesentlichen Fig.2a mit dem Gehäuse 10 für die einen Propeller einschließende Propulsionseinheit 7' mit horizontaler Drehachse, während Fig. 4b im wesentlichen Fig.2b entspricht, wobei die Propulsionseinheit 7 einen Propeller 11, 12 an jedem Ende einer Antriebsgondel 13 aufweist und die Drehachse der Propulsionseinheit gegen die Wasseroberfläche geneigt ist und der Freischlag a gewährleistet, dass auch der vordere Propeller 12 nicht unter Basis schlägt.

Insbesondere die Propulsionseinheit 7 gemäß Fig. 4b kann als Ruderpropeller ausgebildet sein, indem die Einheit um eine geneigte Achse, die die Drehachse der Einheit unter einem rechten Winkel schneidet, um bis zu 360° schwenkbar ist.

Fig. 5 zeigt den Stand der Technik mit einem im Schnitt breiten Skeg, der keinen oder einen sehr kurzen Auslauf besitzt. Zudem läuft er nach oben schräg zum Heck aus. Fig. 6 zeigt gemäß der Erfindung einen schmalen Skeg, der mit einem längeren Auslauf flach ausläuft. Der Skeg verläuft nach oben im wesentlichen gerade.

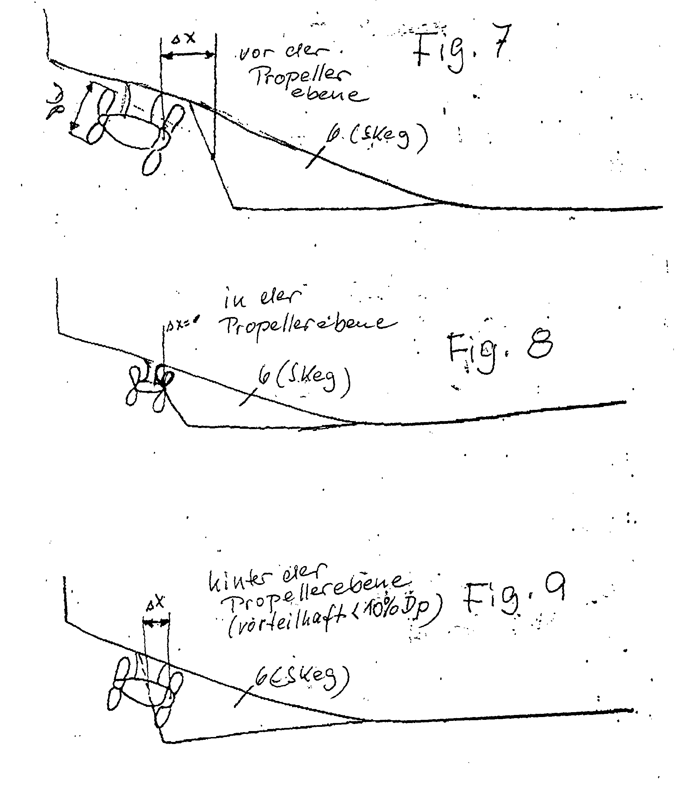

Figen. 7, 8, 9 zeigen die Zuordnung einer oder mehrerer Propulsionseinheiten zum Skeg in der Seitenansicht. Die Propulsionseinheit kann seitlich, aber hinter dem Skeg angeordnet sein, ebenfalls wie gegebenenfalls mehrere solche Propulsionseinheiten (Fig.7), oder sie kann bzw. können den Skeg mehr oder weniger überdecken (Fign.8, 9).

Demzufolge bezieht sich die Erfindung auf die Ausbildung des Bodenbereichs eines Wasserfahrzeuges, insbesondere eines schnellen Fährschiffes, und Zuordnung des Antriebes zu diesem Wasserfahrzeug in seinem Bodenbereich.

## Patentansprüche

1. Schiff, insbesondere schnelles Fährschiff mit PoD-Antrieb, **dadurch gekennzeichnet, dass** zumindest eine Propulsionseinheit im Heckbereich des Schiffes auf der einen bzw. anderen Seite eines in der Rumpflängsmitte angeordneten in Längsrichtung des Schiffes verlaufenden Skeg angeordnet ist, wobei in diesem Bereich der Schiffsrumpfboden im wesentlichen eben und sowohl in der Seitenansicht zum Heck hin nach oben ansteigend als auch in der Längsrichtung gesehen zu den Schiffseitenwänden hin ansteigend gegen die Wasseroberfläche geneigt ist, wobei dieser Schiffsbodenbereich in der Seitenansicht an dem dem Schiffsheck abgewandten Ende in einem stetigen Übergangsbogen in den übrigen, deutlich längeren parallel zur Wasseroberfläche verlaufenden Schiffsbodenbereich übergeht, während der zuerst definierte Schiffsbodenbereich in Übergangsbögen in die Schiffseitenwände übergeht, die beiden Teilbereiche beiderseits der Schiffslängsachse in Übergangsbogen in den symmetrisch zur Schiffslängsachse in Schiffslängsrichtung verlaufenden Skeg übergehen.

2. Schiff, insbesondere schnelles Fährschiff mit PoD-Antrieb, nach Anspruch 1, **dadurch gekennzeichnet, dass** auf jeder der beiden Seiten des Skegs eine von zwei gleichen Propulsionseinheiten angeordnet ist, die gleiche oder entgegengesetzte Drehrichtungen haben können.

3. Schiff, insbesondere schnelles Fährschiff mit PoD-Antrieb nach Anspruch 1 oder s, **dadurch gekennzeichnet, dass** die Propulsionseinheit oder jede der Propulsionseinheiten in der Längsrichtung des Schiffes gegenüber dem Skeg versetzt angeordnet ist bzw. sind.

4. Schiff, insbesondere schnelles Fährschiff mit PoD-Antrieb, nach Anspruch 1 oder 2, **dadurch gekennzeichnet, dass** bei Ausboildung des Propulsionsantriebs bzw. der Propulsionseinheiten mit Doppelpropellern derart, dass an jedem Ende eines gondelartigen Unterwassergehäuses einer von zwei Propellern angeordnet ist, ein Propeller seitlich neben dem Skeg, der andere Propeller gegenüber dem Skeg in Längsrichtung versetzt angeordnet ist.

5. Schiff, insbesondere schnelles Fährschiff mit PoD-Antrieb nach einem der Ansprüche 1 bis 4, **dadurch gekennzeichnet, dass** bei Ausbildung der Propulsionseinheit bzw. -einheiten als Propellerantriebseinheit die Propellerdrehachse bzw. -drehachsen schräg zur Wasseroberfläche, in der Zuströmung geneigt, verlaufend angeordnet sind.

6. Schiff, insbesondere schnelles Fährschiff mit PoD-Antrieb nach einem der Ansprüche 1 bis 5, **dadurch gekennzeichnet, dass** der Propulsionsantrieb(e) ein um eine vertikale Achse um bis zu 360° schwenkbarer Ruderpropellerantrieb ist bzw. die Propulsionsantriebe um je eine vertikale Achse um bis zu 360° schwenkbare Ruderpropellerantriebe sind.

7. Schiff, insbesondere schnelles Fährschiff mit PoD-Antrieb nach einem der Ansprüche 1 bis 6, **gekennzeichnet durch** einen solchen Abstand zwischen dem zumindest einen Propulsionsantrieb und dem Schiffsboden, dass ein breites, homogenes Nachstromfeld ausgebildet wird.

8. Schiff, insbesondere schnelles Fährschiff mit PoD-Antrieb nach einem der Ansprüche 1 bis 7, **gekennzeichnet durch** einen Skegquerschnitt derart, dass ein im wesentlichen rechteckiger Profilquerschnitt zu dem Propulsionsantrieb bzw. den Propulsionsantrieben hin in einer Spitze ausläuft.

9. Schiff, insbesondere schnelles Fährschiff mit PoD-Antrieb nach Anspruch 8, **dadurch gekennzeichnet, dass** bei zwei Propulsionsantrieben in symmetrischer Anordnung seitlich vom Skeg der Skeg symmetrisch zwischen den Antrieben mit symmetrisch zwischen den Propulsionseinheiten liegender Skegspitze ausgebildet ist.

10. Schiff, insbesondere schnelles Fährschiff mit PoD-Antrieb nach Anspruch 9, **dadurch gekennzeichnet, dass** bei zwei Propulsionsantrieben in symmetrischer Anordnung seitlich vom Skeg der Skeg symmetrisch zwischen den Antrieben mit einem Auslauf von mindestens α/t=2 angeordnet ist.
